# EUROPEAN PATENT APPLICATION

(11) **EP 1 367 417 A1**
(43) Date of publication of application: **03.12.2003**
(21) Application number: 02291267.9
(22) Date of filing: 23.05.2002
(51) Int. Cl.: G02B 6/32, G02B 6/24

(54) **Optical fiber alignment technique**

(71) Applicant: CORNING INCORPORATED, Corning, N.Y. 14831 (US)
(72) Inventor: Blarasin, Laurent, 77210 Avon (FR); Brun, Marc Georges, 77000 Vaux Le Penil (FR); Doussoux, Francois, Samois sur Seine (FR); Herve, Patrick Jean Pierre, 77210 Avon (FR)
(74) Representative: Grunfeld, David Peter

(57) **Abstract**

The present invention relates to the alignment and coupling of an optical waveguide fiber (116) to an optical component (100). The method includes the steps of providing an optical component and forming an optical fiber alignment pin (114) on a surface of the optical component (100). The method further includes the steps of providing an optical waveguide fiber (116), aligning an end of the optical waveguide fiber with the optical fiber alignment pin (114), and fusing the end of the optical waveguide fiber (116) to the optical fiber alignment pin (114).

## Description

The present invention relates generally to optical device manufacturing, and particularly to connecting optical waveguide fibers to an optical device.

In the manufacturing of photonic devices, one critical area is the ability to make both high performance and high reliability connections between optical components and optical waveguide fibers, in which there is a difference between the cross sectional area of the optical component and the cross sectional area of the optical waveguide fiber.

The quality of these connections is a critical factor in both determining the useful life of the photonic device and for meeting optical performance requirements. Insertion loss, polarization dependant loss or return loss may be degraded by the operation of connecting optical waveguide fibers to optical components. A major hurdle in the use of fusion coupling of optical waveguide fibers is the development of a process that consistently delivers high quality connections and is deployable into a manufacturing environment.

The present invention relates to a method for connecting optical waveguide fibers to optical devices that ensures the optical performance and reliability of the connection.

A micro-structure array of optical waveguide fiber alignment pins is formed on a surface of an optical component. Both Reactive Ion Etching (RIE) and wet etching using an acid such as, for example, HF are suitable for forming the micro-structure array. In one embodiment, the optical waveguide fiber alignment pins have a circular cross section and a diameter substantially equal to that of the optical waveguide fiber that will be coupled to them.

One embodiment of the invention is an optical device assembly including a lens. The lens includes a first surface and a second surface; the first and second surfaces disposed opposite one another. The optical device assembly further includes an alignment pin projecting from the second surface. The optical device assembly also includes an optical waveguide fiber coupled to the alignment pin. The optical waveguide fiber is coupled to the alignment pin by fusing the optical waveguide fiber to the alignment pin.

Another embodiment of the present invention includes an optical device assembly including a plurality of lenses, each of the plurality of lenses physically coupled to at least another of the plurality of lenses thereby forming a lens array. Each of the lenses includes an optical fiber alignment pin. The optical device assembly also includes a plurality of optical waveguide fibers, and each of the plurality of optical waveguide fibers is coupled to one of the optical fiber alignment pins.

Another embodiment the present invention includes a method for fusion coupling an optical waveguide fiber to an optical component. The method includes the steps of providing an optical component and forming an optical fiber alignment pin on a surface of the optical component. The method further includes the steps of providing an optical waveguide fiber, aligning an end of the optical waveguide fiber with the optical fiber alignment pin, and fusing the end of the optical waveguide fiber to the optical fiber alignment pin.

Another embodiment of the present invention includes a method for fusion coupling an optical waveguide fiber to an optical component. The method includes the steps of providing an optical component, the optical component having an optical axis and forming an alignment pin on the optical component. The alignment pin is formed so as to be axially aligned with the optical axis of the optical component. The method further includes the steps of providing an optical waveguide fiber and aligning the optical axis of the optical waveguide fiber with the optical axis of the optical component. The method further includes the steps of bringing the optical waveguide fiber into contact with the alignment pin and fusing the optical waveguide fiber to the alignment pin such that light entering the pin from the optical waveguide fiber propagates along the optical axis of the optical component and light entering the pin from the optical element is directed into the optical waveguide fiber.

In another aspect, the present invention includes a method for making a pigtailed array of lenses. The method includes the steps of providing a monolithic array of optical lenses, forming an alignment pin in the optical path of each optical lens in the monolithic array, providing a plurality of optical waveguide fibers, and fusing each of the plurality of optical waveguide fibers to a respective alignment pin.

In one embodiment of the invention, the step of forming an alignment pin includes the steps of providing a pattern and applying a layer of photoresistant material to a surface of the monolithic array of optical lenses. The step of forming an alignment pin further includes exposing the layer of photoresistant material to light that has passed through the pattern, thereby creating a predetermined pattern in the photoreistant layer and removing the predetermined portions of the layer of photoresistant material. The step of forming an alignment pin further includes etching the surface of the monolithic array of optical lenses, thereby removing material from the surface not covered by the layer of photoresistant material; and removing any remnants of the layer of photoresistant material.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

One advantage of the present invention is that there is no optical adhesive in the optical path, particularly close to pigtails where the energy density of the optical signal is high.

Another advantage of the present invention is that it the optical waveguide fiber does not require the application of an antireflection coating to the end of the fiber being coupled to the optical device.

Another advantage of the present invention is that the optical waveguide fiber does not require a beveled ferrule to connect the optical waveguide fiber to the optical device.

Another advantage of the present invention is that it may provide an optical connection with an optical return loss less that -50 dB.

Another advantage of the present invention is that the thermal properties of the optical waveguide fiber may be closely matched to those of the optical device.

Another advantage of the present invention is that by using laser fusion reliability is increased over an electric arc fusion splicing process because the corrosion of the electrodes is removed from the process.

Another advantage of the present invention is that the invention is readily adaptable for use with large arrays, such as, for example 32x32 micro-lens array.

Another advantage of the present invention is that the use of pin array to compensate cross-sectional mismatch is critical to ensure consistency in the manufacturing process.

Another advantage of the present invention is that the active alignment technique used ensures angular beam deviation across the array within 0.2 mrad.

Another advantage of the present invention is that highly reliable connections between the optical waveguide fiber and the optical device are obtained; the robustness and optical quality of these connections are primarily independent of temperature, optical power and moisture.

Another advantage of the present invention is that it offers a lower cost alternative for attaching optical waveguide fibers to a lens array than epoxy bonding.

Another advantage of the present invention is that fast cycle times, on the order of a 30 second per fiber to device connection, may be achieved.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.
**Figure 1** is a flowchart showing the fabrication process steps of the present invention in block diagram form; and
**Figures 2**, **3**, **4** and **5** are cross-sectional views illustrating successive steps in making an optical device in accordance with the fabrication process embodiment of the present invention depicted in **Figure 1**.

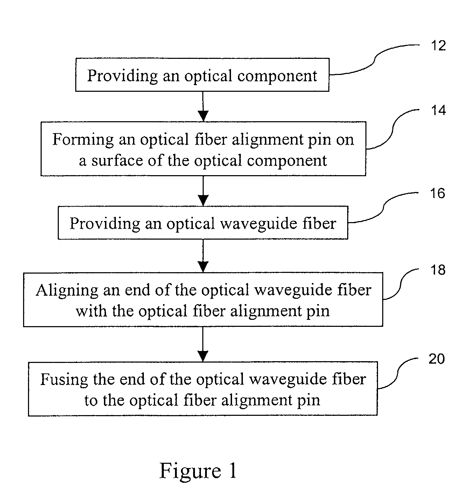

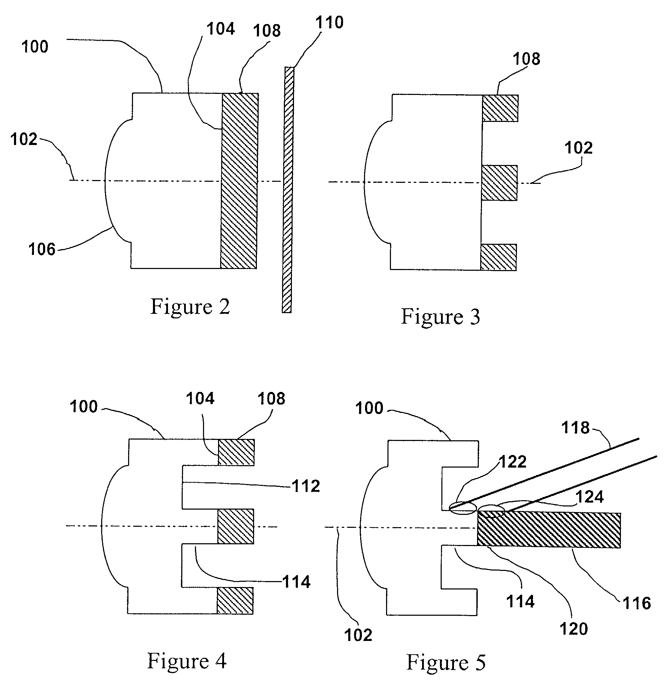

Reference will now be made in detail to the present preferred embodiment(s) of the invention, examples of which are illustrated in the accompanying drawings. The accompanying drawings are not necessarily to scale, and in some cases have been distorted for clarity. Whenever possible, the same reference numerals will be used throughout the drawings to refer to the same or like parts. One embodiment of the method of the present invention is shown in **Figure 1**, and is designated generally throughout by the reference numeral **10**. **Figures 2-5** are side sectional views showing successive stages in the fabrication of an optical device in accordance with the illustrative embodiment of the present invention shown in **Figure 1**.

As embodied herein and depicted in **Figure 1**, the present invention for a method **10** of connecting optical waveguide fibers to an optical device includes the step **12** of providing an optical component, such as, for example a micro-lens or array of micro-lenses. The optical component includes an optical axis. An optical waveguide fiber is to be coupled to the optical component so that the optical component and the optical waveguide fiber may engage in reciprocal optical communication with one another.

The method **10** further includes the step **14** of forming an optical fiber alignment pin on a surface of the optical component. The alignment pin is part of a microstructure that is etched into the surface of the optical component using photolithography and deep etching techniques, such as, for example Reactive Ion Etching (RIE) and wet etching using an acid such as, for example HF. Typically, the microstructure includes a depressed region surrounding the alignment pin, such as, for example a depressed annular region. The alignment pin is sized to facilitate fusion splicing to an optical waveguide fiber, and to that end the alignment pin has a cross sectional area close to that of the optical waveguide fiber. For example, if the optical waveguide fiber has a diameter of 125µm the alignment pin may have a circular cross section with a diameter of about 125µm, additionally polygonal shapes, such as, triangles, rectangles, etc. may be used. The alignment pin is etched to a depth of between about 30µm and about 50µm. Preferably, the centroid of the alignment pin is coincident with the optical axis of the optical component.

The method **10** further includes the step **16** of providing an optical waveguide fiber. The optical waveguide fiber may be either a single mode or multi-mode optical waveguide fiber.

The method **10** further includes the step **18** of aligning the end of the optical waveguide fiber with the optical fiber alignment pin. The objective of this alignment is to achieve a desired optical characteristic, such as, for example minimizing the insertion loss between the optical component and the optical waveguide fiber. The alignment includes placing the optical axis of the optical component with the optical axis of the optical waveguide fiber into a desirable spatial relationship with one another, such as, for example having the two optical axes coincident or nearly coincident with one another. The optical waveguide fiber may be aligned with the optical fiber alignment pin using either passive or active alignment techniques. For passive alignment of the optical waveguide fiber to the optical fiber alignment pin, the optical fiber alignment pin is preferably circular in cross section and has about the same diameter as the optical waveguide fiber.

The method **10** further includes the step **20** of fusing the end of the optical waveguide fiber to the optical fiber alignment pin. The step **20** of fusing the end of the optical waveguide fiber to the optical fiber alignment pin includes abutting the end of the optical waveguide fiber to the end of the optical fiber alignment pin while maintaining the relative alignment of the optical axes of the optical waveguide fiber and the optical fiber alignment pin. The optical waveguide fiber and the optical fiber alignment pin are simultaneously heated using a laser until a fusion splice is made between the optical waveguide fiber and the optical fiber alignment pin. The heating of the optical waveguide fiber and the optical fiber alignment pin by a laser includes directing a laser beam, such as, for example a beam from a CO₂ laser onto a portion of the depressed region of the microstructure away from the base of the optical fiber alignment pin. The laser beam forms an angle of incidence with the depressed region of the microstructure of less than 90 degrees and preferably of about 35 degrees. The incident laser beam is aligned so that about 70% of the laser beam's energy is directed onto the optical fiber alignment pin and about 30% the laser beam's energy is directed onto optical fiber waveguide. This ratio allows both the end of the optical fiber alignment pin and the end of the optical fiber waveguide to reach the temperature required for fusing the end of the optical fiber alignment pin and the end of the optical fiber waveguide at substantially the same time. Similarly, the heat propagates to the end of the optical waveguide fiber, thereby raising the temperature of the end of the optical waveguide fiber. The end of the optical fiber alignment pin and the end of the optical waveguide fiber soon reach temperatures where the two ends fuse together, the laser is then turned off and the process is complete.

Referring now to **Figure 2,** there is shown a optical component **100** having an optical axis **102** and a surface **104** disposed opposite a lensing surface **106**. The surface **104** is covered with a photoresist layer **108**. A photomask **110** is used to define a pattern in the photoresist layer **108**. It is intended that the photomask **110** define a microstructure for aligning an optical waveguide fiber with the optical axis **102** of the optical component **100**. Light is directed through the photomask **110** to expose portions of the photoresist layer **108** thereby allowing patterns to be selectively formed in the photoresist layer **108**.

Referring to **Figure 3**, the development of the photoresist layer **108** yields an annular aperture aligned with the optical axis **102**.

Referring to **Figure 4,** the photoresist layer **108** acts as an etch mask to permit microstructure **112** to be selectively etched into the optical component **100.** The microstructure **112** includes an optical waveguide alignment pin **114** that is substantially coincident with the optical axis **102** of the optical component **100**. The optical fiber alignment pin **114** is sized to substantially match the diameter of an optical waveguide fiber, such as, for example 125 µm for a typical single mode optical waveguide fiber. The surface 104 of the optical component 100 is etched to a depth appropriate to allow heat to propagate into the alignment pins thus allowing the fusion splicing of the optical waveguide fiber to the alignment pin. The fusing process is described more fully below. Both Reactive Ion Etching (RIE) and wet etching using an acid such as, for example HF may be used. Typically, the surface **104** is etched to a depth of about 30 microns to about 50 microns.

**Figure 5** shows the fusing of an optical waveguide fiber **116** to the optical fiber alignment pin **114**. The photoresist layer **108** has been removed and the end of the optical waveguide fiber **116** is placed against the end of the alignment pin **114**. The optical waveguide fiber **116** is positioned so that its optical axis is coincident with the optical axis **102** of the optical component **100.** A laser beam **118,** such as, for example a beam from a CO₂ laser, is used to heat the alignment pin **114** and the end portion **120** of the optical waveguide fiber **116.** A portion **122** of the laser beam **118** is directed onto a alignment pin **114** of the microstructure at a and a portion **124** of the laser beam **118** is directed onto the end portion **120** of the optical waveguide fiber **116.** In one embodiment of the present invention about 30 percent of the laser beam **118** is directed onto the end portion **120** of the optical waveguide fiber **116** and about 70 percent of the laser beam **118** is directed onto the alignment pin **114**. The alignment pin **114** and the end portion **120** of the optical waveguide fiber **116** are heated until the optical waveguide fiber **116** is fused to the alignment pin **114**.

In an example of an embodiment of the present invention an alignment pin having a diameter of 125µm and a length of 50µm was formed on the back of a silica micro-lens using photolithography and reactive ion etching. A length of SMF-28™ optical waveguide fiber, available from Corning Incorporated of Corning, New York was fused to the alignment pin using a 3 Watt laser beam generated by a CO₂ (carbon dioxide) laser. The laser beam was directed onto an area near the base of the alignment pin at a 35 degree angle of incidence with the surface. About 30 percent of the laser beam was reflected onto the end of the optical waveguide fiber. The laser beam heated the micro-lens, thereby increasing the temperature of the end of the alignment pin in contact with the optical waveguide fiber. Similarly, the portion of the laser beam that is reflected onto the end of the optical fiber heats the end of the optical fiber. The heating of the alignment pin and the end of the optical waveguide fiber was continued until the end of the optical waveguide fiber was fused to the end of the alignment pin. The cycle time was approximately 7 seconds.

It is clear from the foregoing that the invention may be used for aligning multiple optical waveguide fibers with the individual lenses in an array of lenses, as well as being used for aligning a single optical waveguide fiber with a single micro-lens. In this case, only a single alignment pin would be made at a location corresponding to the central axis of the corresponding lens.

It will be apparent to those skilled in the art that various modifications and variations can be made to the present invention without departing from the spirit and scope of the invention. Thus it is intended that the present invention cover the modifications and variations of this invention provided they come within the scope of the appended claims and their equivalents.

## Claims

1. An optical device assembly comprising:
a lens, said lens having a first surface and a second surface, said first and second surfaces disposed opposite one another;
an alignment pin projecting from said second surface; and
an optical waveguide fiber coupled to said alignment pin;
wherein said optical waveguide fiber is coupled to said alignment pin by fusing said optical waveguide fiber to said alignment pin.

2. The optical device of claim 1, wherein said alignment pin is disposed coaxailly with the optical axis of the lens.

3. The optical device of claim 2, wherein said alignment pin is a cylinder.

4. The optical device of claim 3, wherein said alignment pin has a diameter of about 125µm.

5. The optical device of claim 3 or 4, wherein said alignment pin is greater than about 30µm in length.

6. The optical device of claim 5, wherein said alignment pin is less than about 50µm in length.

7. A method for fusion coupling an optical waveguide fiber to an optical component comprising the steps of:
providing an optical component, the optical component having an optical axis; forming an alignment pin on the optical component, wherein the alignment pin is axially aligned with the optical axis of the optical component;
providing an optical waveguide fiber;
aligning the optical axis of the optical component with the optical axis of the optical waveguide fiber;
bringing the optical waveguide fiber into contact with the alignment pin; and
fusing the optical waveguide fiber to the pin;
such that light entering the pin from the optical waveguide fiber propagates along the optical axis of the optical component and light entering the pin from the optical component is directed into the optical waveguide fiber.

8. The method of claim 7, wherein the step of forming the alignment pin includes the steps of:
depositing a photoresistant layer on a surface of the optical component;
patterning the photoresistant layer; and
etching the surface of the optical component to form the alignment pin.

9. The method of claim 8, wherein the step of etching includes using reactive ion etching to remove material from a surface of the optical component.

10. The method of claim 8, wherein the step of etching includes using an acid to remove material from a surface of the optical component.

11. The method of any of claims 8 to 10, wherein the step of etching includes removing material to a depth from about 30 microns to about 50 microns.

12. The method of any of claims 8 to 11, wherein the step of etching includes forming a cylinder.

13. The method of claim 12, wherein the cylinder is 125 µm in diameter.

14. The method of any of claims 7 to 13, wherein the step of fusing includes the step of heating the alignment pin and the optical waveguide fiber with a laser beam.

15. The method of claim 14, wherein the step of heating includes the steps of:
directing a first portion of the laser beam onto the surface of the optical component so as to heat the alignment pin; and
directing a second portion of the laser beam onto the optical waveguide fiber so as to heat the optical waveguide fiber;
wherein the alignment pin and the optical waveguide fiber reach their respective fusion temperatures substantially simultaneously.

16. The method of claim 15, wherein the first portion of the laser beam contains about 70% of the energy of the laser beam and the second portion of the laser beam contains about 30% of the energy of the laser beam.

17. A method for making a pigtailed array of lenses comprising the steps of:
providing a monolithic array of optical lenses;
forming an alignment pin in the optical path of each optical lens in the monolithic array;
providing a plurality of optical waveguide fibers; and
fusing each of the plurality of optical waveguide fibers to a respective alignment pin.

18. The method of claim 17, wherein the step of forming an alignment pin includes the steps of:
providing a pattern;
applying a layer of photoresistant material to a surface of the monolithic array of optical lenses;
exposing the layer of photoresistant material to light that has passed through the pattern, thereby creating a predetermined pattern in the photoreistant layer;
removing the predetermined portions of the layer of photoresistant material;
etching the surface of the monolithic array of optical lenses, thereby removing material from the surface not covered by the layer of photoresistant material; and
removing any remnants of the layer of photoresistant material.

19. The method of claim 18, wherein the step of etching forms cylindrical bodies having a diameter of about 125 µm.

20. The method of claim 19, wherein the cylindrical bodies have a length greater than about 30 µm.

21. The method of claim 20, wherein the cylindrical bodies have a length less than about 50 µm.

22. A method for making an optical device comprising the steps of:
providing an optical waveguide fiber;
forming of a light transmissive material a substrate having a first surface and a second surface, the second surface disposed opposite the first surface, wherein the first surface has formed thereon a lens, the lens having a central axis;
forming a microstructure on the second surface by photolithographic masking and etching, the microstructure extending into the substrate and including an optical waveguide fiber attachment pin, the optical waveguide fiber attachment pin having a diameter approximately equal to the diameter of the optical waveguide fiber; and
mounting the optical waveguide fiber to the optical waveguide fiber attachment pin so that the optical axis of the optical waveguide fiber is substantially coincident with the central axis of the lens;
whereby the lens is capable of directing light into the mounted optical waveguide fiber.

23. The method of claim 22, wherein the step of mounting includes the steps of:
heating the optical waveguide fiber attachment pin; and
fusing the optical waveguide fiber to the optical waveguide fiber attachment pin.

24. The method of claim 23, wherein the step of mounting further includes, prior to the step of heating, the step of abutting the end of the optical waveguide fiber to the end of the optical waveguide fiber attachment pin.

25. The method of claim 24, wherein the step of heating includes the steps of:
providing a laser beam; and
directing the laser beam onto a portion of the microstructure adjacent to the optical waveguide fiber attachment pin.

26. The method of claim 25, wherein the laser beam forms an angle of about 65 degrees with the portion of the microstructure adjacent to the optical waveguide fiber attachment pin.
